Europäisches Patentamt

European Patent Office   (11) Veröffentlichungsnummer : **0 030 261**

Office européen des brevets   **B1**

(19)

(12)   **EUROPÄISCHE PATENTSCHRIFT**

(45) Veröffentlichungstag der Patentschrift :   (51) Int. Cl.³ : **B 23 K 35/30, H 01 H  1/02**
**13.07.83**

(21) Anmeldenummer : **80106243.1**

(22) Anmeldetag : **15.10.80**

㊴ **Lotlegierungen zum direkten Auflöten von oxidhaltigen Silberkontakten auf Kontaktträger.**

(30) Priorität : **05.12.79 DE 2948915**

(43) Veröffentlichungstag der Anmeldung :
**17.06.81 Patentblatt 81/24**

(45) Bekanntmachung des Hinweises auf die Patenterteilung : **13.07.83 Patentblatt 83/28**

(84) Benannte Vertragsstaaten :
**AT CH FR GB LI**

(56) Entgegenhaltungen :
**DE A 2 438 922**
**FR A 2 020 895**
**GB A 954 433**
**US A 2 235 634**
**US A 2 917 140**
**US A 3 466 735**
**US A 3 941 299**

(73) Patentinhaber : **Degussa Aktiengesellschaft**
**Weissfrauenstrasse 9**
**D-6000 Frankfurt am Main 1 (DE)**

(72) Erfinder : **Szulczyk, Andreas, Dipl.-Ing.**
**Im Hirtengarten 31**
**D-6464 Linsengericht 5 (DE)**

Lotlegierungen zum direkten Auflöten von oxidhaltigen Silberkontakten auf Kontaktträger

Die Erfindung betrifft phosphorfreie Lotlegierungen aus Silber, Kupfer, Kadmium und/oder Zinn und/oder Indium zum direkten Auflöten von elektrischen Kontakten aus Silber mit Kadmiumoxid und/oder Zinnoxid und/oder Indiumoxid auf Kontaktträger.

Silber-Metalloxidwerkstoffe werden aufgrund ihrer günstigen schalttechnischen Eigenschaften als Kontaktmaterial in Schaltgeräten mit hohen Schaltzahlen bei kleiner oder mittlerer Strombelastung in grossem Umfang eingesetzt. Die wichtigsten Vertreter dieser Verbundwerkstoff-Gruppe sind Silber-Kadmiumoxid, Silber-Zinnoxid, Silber-Zinkoxid und Silber-Indiumoxid.

Infolge des hohen Metalloxidgehaltes sind die Kontaktauflagen nach derzeitigem Stand der Technik nicht direkt auf metallische Kontaktträger auflötbar. Für die Anwendung als Kontaktmaterial in elektrischen Schaltgeräten müssen die Kontaktauflagen daher lötfähig gemacht werden. Aus diesem Grund werden die Kontaktauflagen einseitig mit einer Schicht aus einem gut löt- oder schweissbaren Metall oder Metall-Legierung versehen.

So ist es beispielsweise bekannt, die aus Silberlegierungen bestehenden Werkstücke nur einseitig innerlich zu oxydieren (ca. 70 % der Bleckdicke) und die nichtoxydierte metallische Schicht als lötfähige Fläche zu verwenden (DE-AS 1 033 815). Das Verfahren ist jedoch nur bei Silberlegierungen anwendbar, die sich innerlich oxydieren lassen und im oxydierten Zustand noch ausreichend duktil sind, so daß sie sich zum Fertigteil umformen lassen. Bei Silberlegierungen, die im oxydierten Zustand nicht ausreichend duktil sind, erfolgt die Formgebung vor der Oxydation. Hierbei wird das Vormaterial zur Erzielung einer lötbaren Schicht mit Silber plattiert. Die Kontaktauflagen werden dann als Fertigteil oxydiert (DE-ASen 23 34 160 und 1 803 502). Bei längeren Oxydationszeiten verliert die Silberschicht jedoch an Haftfestigkeit und die fertigen Kontaktauflagen lösen sich im Betrieb von den Kontaktträgern ab.

Pulvermetallurgisch hergestellte Silber-Metalloxid-Kontakte können durch Anpressen und gemeinsames Sintern mit einer lötfähigen Silberschicht versehen werden (DE-AS 1 187 333). Dieses Verfahren ist jedoch teuer und nur bei pulvermetallurgisch hergestellten Silber-Metalloxid-Kontaktauflagen anwendbar.

Aus der DE-AS 1 090 484 ist bekannt, Silber-Kadmium-Legierungen einseitig mit einer Silberlotschicht zu versehen und erst danach innerlich zu oxydieren. Das Verfahren hat aber den Nachteil, daß es nur bei innerlich oxidierbaren Kontaktmaterialien anwendbar ist. Weiterhin führen hier metallphysikalisch bedingte Erscheinungen zu verfahrenstechnischen Schwierigkeiten, die später bei der Lötung der Kontaktstücke Verarbeitungsprobleme mit sich bringen (z. B. Anstieg der Arbeitstemperatur des Lotes).

In der DE-AS 1 232 282 wird ein Lötverfahren beschrieben, bei dem die zu lötende Kontaktfläche mit einem Zinn-Blei-Weichlot vorbelotet und anschließend mit einem üblichen Silberhartlot der Kontakt auf den Kontaktträger aufgelötet wird. Der Nachteil dieses Verfahrens besteht darin, daß die zu verbindenden Teile mehrere Minuten auf Temperaturen oberhalb der Arbeitstemperatur des Silber-Hartlotes erhitzt werden müssen, um eine einwandfreie Verbindung zu gewährleisten. Bestehen die Kontaktträger aus ausgehärteten Legierungen, so kann der Aushärtungseffekt verloren gehen.

Außerdem ist es bekannt (DE-AS 23 65 450), dem Silber-Metalloxid-Werkstoff eine lötbare, den Verbundwerkstoff benetzende Silber-Kupferlegierung mit 10 oder 28 % Kupfer zu hintergießen und anschließend mit dem Kontaktträger zu verlöten. Auch hier muß vor dem eigentlichen Lötvorgang erst eine lötbare Schicht aufgebracht werden.

In den US-Psen 22 35 634 und 29 17 140 werden phosphorfreie Lotlegierungen beschrieben, die beispielsweise 55,8 % Silber, 20 % Kupfer, 24 % Kadmium und 0,2 % Lithium, bzw. 60 % Silber, 27 % Kupfer und 13 % Indium bzw. 60 % Silber, 30 % Kupfer und 10 % Zinn enthalten. Diese Legierungen dienen jedoch zum Löten von hochlegierten Stählen bzw. von metallisierter Keramik. Silber-Metalloxidwerkstoffe können mit diesen Lotlegierungen nicht optimal auf Kontaktträger aufgelötet werden.

Bekannt ist weiterhin die Aufbringung eines Reaktivlotes auf der Basis Kupfer-Silber-Phosphor als lötbare Schicht auf den Silber-Metalloxid-Werkstoff (DE-OS 24 38 922). Hierbei müssen jedoch die entstehenden Reaktionsprodukte in einem weiteren Arbeitsgang entfernt werden. Außerdem sind phosphorhaltige Lote wegen der Bildung von spröden Eisenphosphidschichten zum direkten Auflöten der Kontaktauflagen euf eisenhaltige Kontaktträger nicht geeignet.

Es war daher Aufgabe der vorliegenden Erfindung, phosphorfreie Lotlegierungen zum direkten Auflöten von elektrischen Kontakten aus Silber mit Kadmiumoxid und/oder Zinnoxid und/oder Indiumoxid auf Kontaktträger zu finden, die einfach, universell und zuverlässig einsetzbar sind, und bei denen keine Reaktionsprodukte in einem zusätzlichen Arbeitsgang entfernt werden müssen.

Diese Aufgabe wurde erfindungsgemäß dadurch gelöst, daß sie aus 25 bis 65 % Silber, 20 bis 40 % Kupfer und 10 bis 40 % Kadmium und/oder Zinn und/oder Indium bestehen, wobei dei Anteile der Komponenten in den genannten Grenzen so gewählt werden muß, daß die Liquidustemperatur 750 °C nicht überschreitet, und als dritte bzw. weitere Legierungskomponente das Metall bzw. die Metalle verwendet wird bzw. werden, das bzw. die im Kontaktwerkstoff als Metalloxid vorliegt bzw. vorliegen.

Bei eisenhaltigen Kontaktträgern hat es sich bewährt, den Lotlegierungen noch bis zu 0,5 % Lithium und/oder Zink zur Verbesserung der Benetzbarkeit zuzusetzen.

Besonders bewährt haben sich Lotlegierungen mit 55 bis 65 % Silber, 25 bis 30 % Kupfer und 10 bis 20 % Indium bzw. 25 bis 60 % Silber, 20 bis 35 % Kupfer und 20 bis 40 % Kadmium.

Überraschenderweise hat sich herausgestellt, daß im Gegensatz zum Stand der Technik die erfindungsgemäßen Lotlegierungen zum direkten Auflöten von Kontaktwerkstoffen mit hohem Metalloxidgehalt, z. B. 12 Gew.% Metalloxid, auf Kontaktträger geeignet sind.

Weiterhin hat sich überraschenderweise gezeigt, daß erfindungsgemäß silberhaltige Legierungen eingesetzt werden können, die benetzungsfördernde Legierungsbestandteile enthalten, deren thermochemische Aktivität gegenüber dem in der Kontaktschicht eingesetzten Metalloxid soweit erniedrigt ist, daß keine, bzw. keine vollständige Reduktion des Metalloxids in der Verbindungszone stattfindet und sich in dem Verbindungsbereich keine spröde Zone ausbildet (z. B. bei Ag-Cu-In-Legierungen).

Folgendes Beispiel soll die Anwendung der erfindungsgemäßen Lotlegierungen näher erläutern :

Ag/CdO-Kontaktauflagen mit 12 Gew.% CdO ohne lötbare Zwischenschicht werden auf Eisen- oder Kupferträger mit Loten folgender Zusammensetzung aufgelötet :

1.  53 % Ag/21 % Cu/25,8 % Cd/0,2 % Li
2.  30 % Ag/33 % Cu/37 % Cd
3.  60 % Ag/27 % Cu/13 % In

Mit den gelöteten Kontaktauflagen wurden in zwei Serienschaltgeräten Funktionstests durchgeführt, wobei folgende Prüfbedingungen gewählt wurden :

Schütz Typ I

| Nennstrom : | 250 A, 3-phasig, Doppelunterbrechung |
|---|---|
| Prüfspannung : | 380 V, 50 Hz |
| Einschaltstrom : | 1.000 A |
| Ausschaltstrom : | 1.000 A |
| Cos φ : | 0,4 |
| Einschaltdauer : | ca. 80 ms |
| Schalthäufigkeit : | 250/h |

Schütz Typ II

| Nennstrom : | 75 A, 3-phasig, Doppelunterbrechung |
|---|---|
| Prüfspannung : | 380 V, 50 Hz |
| Einschaltstrom : | 415 A |
| Ausschaltstrom : | 415 A |
| Cos φ : | 0,35 |
| Einschaltdauer : | ca. 80 ms |
| Schalthäufigkeit : | 250/h |

Die Funktionstests ergaben folgende Ergebnisse :

| Lotwerkstoff | Schütz-Typ | erreichte Schaltzahl (Soll-Schaltzahl 50.000) |
|---|---|---|
| Ag – Cu – Cd | I | 50.000 |
| Ag – Cu – Cd | II | 50.000 |
| Ag – Cu – Cd – Li | II | 50.000 |
| Ag – Cu – In | I | 60.000 |

Die erfindungsgemäßen Lotlegierungen eignen sich also hervorragend zum direkten Auflöten von elektrischen Kontaktauflagen aus Silber und Metalloxiden auf Kontaktträger und bewirken eine ausgezeichnete Haftfestigkeit zwischen Kontaktschicht und Kontaktträger.

**Ansprüche**

1. Phosphorfreie Lotlegierungen aus Silber, Kupfer, Kadmium und/oder Zinn und/oder Indium zum direkten Auflöten von Kontakten aus Silber mit Kadmiumoxid und/oder Zinnoxid und/oder Indiumoxid auf Kontaktträger, wobei die Lotlegierungen 25 bis 65 % Silber, 20 bis 40 % Kupfer und 10 bis 40 % Kadmium und/oder Zinn und/oder Indium enthalten, die Anteile der Komponenten in den genannten Grenzen so gewählt werden müssen, daß die Liquidustemperatur 750 °C nicht überschreitet, und als dritte beziehungsweise weitere Legierungskomponente das Metall bzw. die Metalle verwendet wird bzw. werden, das bzw. die im Kontaktwerkstoff als Metalloxid vorliegt bzw. vorliegen.

2. Phosphorfreie Lotlegierungen nach Anspruch 1, dadurch gekennzeichnet, daß sie 55 bis 65 % Silber, 25 bis 30 % Kupfer und 10 bis 20 % Indium enthalten.

3. Phosphorfreie Lotlegierungen nach Anspruch 1, dadurch gekennzeichnet, daß sie 25 bis 60 % Silber, 20 bis 35 % Kupfer und 20 bis 40 % Kadmium enthalten.

4. Phosphorfreie Lotlegierungen nach den Ansprüchen 1 bis 3, dadurch gekennzeichnet, daß sie zusätzlich bis zu 0,5 % Lithium und/oder Zink enthalten.

**Claims**

1. Phosphorus-free solder alloys of silver, copper, cadmium and/or tin and/or indium for directly soldering contacts of silver with cadmium oxide and/or tin oxide and/or indium oxide on contact supports, the solder alloys containing from 25 to 65 % of silver, from 20 to 40 % of copper and from 10 to 40 % of cadmium and/or tin and/or indium, the quantities of the components having to be selected within the above-mentioned limits so that the liquidus temperature does not exceed 750 °C, and the metal or metals is/are present in the contact material as metal oxide.

2. Phosphorus-free solder alloys according to claim 1, characterised in that they contain from 55 to 65 % of silver, from 25 to 30 % of copper and from 10 to 20 % of indium.

3. Phosphorus-free solder alloys according to claim 1, characterised in that they contain from 25 to 60 % of silver, from 20 to 35 % of copper and from 20 to 40 % of cadmium.

4. Phosphorus-free solder alloys according to claims 1 to 3, characterised in that they also contain up to 0.5 % of lithium and/or zinc.

**Revendications**

1. Alliages à souder exempts de phosphore, constitués par de l'argent, cuivre, cadmium et/ou étain et/ou indium, pour soudage direct de contacts en argent contenant de l'oxyde d'indium sur des porte-contacts, alliages à souder caractérisés en ce qu'ils contiennent 25 à 65 % d'argent, 20 à 40 % de cuivre et 10 à 40 % de cadmium et/ou étain et/ou indium, la proportion des composants étant choisie à l'intérieur des limites mentionnées de façon que la température de liquides ne dépasse pas 750 °C et que comme troisième (ou autre) composant d'alliage, on utilise le ou les métaux présents dans le matériau de contact sous forme d'oxyde métallique.

2. Alliages selon la revendication 1, caractérisés en ce qu'ils contiennent 55 à 65 % d'argent, 25 à 30 % de cuivre et 10 à 20 % d'indium.

3. Alliages selon la revendication 1, caractérisés en ce qu'ils contiennent 25 à 60 % d'argent, 20 à 35 % de cuivre et 20 à 40 % de cadmium.

4. Alliages selon la revendication 1, caractérisés en ce qu'ils contiennent en outre jusqu'à 0,5 % de lithium et/ou de zinc.